Europäisches Patentamt

European Patent Office

Office européen des brevets

(19)

(11) Veröffentlichungsnummer: **0 071 212**
**B1**

(12)

# EUROPÄISCHE PATENTSCHRIFT

(45) Veröffentlichungstag der Patentschrift:
09.04.86

(21) Anmeldenummer: 82106681.8

(22) Anmeldetag: 23.07.82

(51) Int. Cl.⁴: **D 04 H 13/00,** D 06 N 7/00,
A 61 F 13/00, A 61 H 33/04,
A 61 L 15/00, A 62 C 7/00,
E 01 C 9/08, E 02 B 3/12,
G 10 K 11/16, B 60 B 39/00

(54) Mattenförmiger Schichtkörper und Verfahren zu seiner Herstellung.

(30) Priorität: 27.07.81 DE 3129509

(43) Veröffentlichungstag der Anmeldung:
09.02.83 Patentblatt 83/6

(45) Bekanntmachung des Hinweises auf die Patenterteilung:
09.04.86 Patentblatt 86/15

(84) Benannte Vertragsstaaten:
AT BE CH DE FR GB IT LI LU NL SE

(56) Entgegenhaltungen:
DE - A - 1 435 762
DE - A - 1 560 651
DE - A - 2 321 362
DE - A - 2 352 019
DE - A - 2 742 030
DE - A - 2 855 059
FR - A - 2 022 947
FR - A - 2 152 740
NL - A - 7 212 202
US - A - 2 340 370
US - A - 4 250 172

(73) Patentinhaber: Tesch, Günter Horst, Avenue
Jean-Marie-Musy 15, CH-1700 Fribourg (CH)

(72) Erfinder: Tesch, Günter Horst, Avenue
Jean-Marie-Musy 15, CH-1700 Fribourg (CH)

(74) Vertreter: Lesser, Karl-Bolko, Dipl.-Ing., European
Patent Attorney Johanneskirchnerstrasse 149a,
D-8000 München 81 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen mattenförmigen Schichtkörper gemäß Oberbegriff des Anspruches 1.

Ein solcher ist z.B. bekannt aus der DE-OS 28 55 059. Dieser bekannte Schichtkörper enthält zwischen einer Deckschicht und einer Unterlagsschicht eine Schicht von Wirkstoffpartikeln, wobei mindestens die Deckschicht aktiv durch die Partikelschicht hindurch mit der Unterlagsschicht vernadelt ist. Diese in dem bekannten Schichtkörper vorgesehenen Wirkstoffpartikel können nun an vorbei oder durchströmendes Wasser z. B. Düngstoffe oder Schutzstoffe für die Pflanzenzucht abgeben, kann sich bei ihnen aber auch z.B. um zerkleinerte Naturstoffe, wie Leder, Torf, Baumrinde oder dergleichen handeln.

Diese bekannten Schichtkörper können als Filter benutzt werden, sie eignen sich aber z.B. dann, wenn sie Torf enthalten, auch dazu, ausgelaufenes Öl wieder aufzusaugen.

Solcher bekannter Schichtkörper kann Ionenaustauscher als Wirkstoffpartikel enthalten, wodurch es mit ihm z.B. möglich ist, in Hydrokulturen die Karbonathärte des Wassers zu beseitigen und andererseits Düngesalze freizusetzen.

Insbesondere bei der Verwendung im Rahmen der Hydrokultur haben sich jedoch in der Praxis verschiedene Nachteile dieses bekannten Schichtkörpers herausgeschält.

Aufgrund der verwendeten Materialien, die zwischen der Deckschicht und der Unterlagsschicht des Schichtkörpers festgehalten werden, ist dieser bekannte Schichtkörper sehr leicht. Das hat zur Folge, daß er z.B. in Hydrokulturen sich nicht am Boden absetzt, sondern aufschwimmt und dabei mit den im Wasser befindlichen Teilen der Pflanzen in Berührung kommt, was jedoch nicht erwünscht ist. Weiterhin ist es besonders schwierig, geringe Mengen von Wirkstoff-Partikeln oder dergleichen in diesem Schichtkörper gleich-mäßig zu verteilen, was insbesondere dann zu Problemen führt, wenn man einen großflächig hergestellten Schichtkörper in einzelne Teilabschnitte portioniert.

Die Verwendungsmöglichkeiten für den bekannten Schichtkörper sind durch die in ihm enthaltenen Wirkstoffpartikel auf einige wenige, der Natur dieser Wirkstoffpartikel entsprechende Bereiche beschränkt, insbesondere dadurch, daß die in ihm enthaltenen Partikel teilweise schon dann sehr reaktionsfreudig sind, wenn sie mit Umgebungsluft in Kontakt kommen, insbesondere aber ihr Verhalten dann stark ändern, wenn andere Medien, insbesondere Flüssigkeiten, den Schichtkörper durchdringen.

Aus der DE-A-2.321.362 ist eine sogenannte Erosionsschutzmatte bekannt, die im wesentlichen aus zwei Fasern enthaltenden Schichten besteht. Die eine dieser beiden Schichten, ist eine sehr lockere, voluminöse Wirrfaserschicht, in die Feststoffe, wie Sand od.dgl. nachträglich eingebracht und abgelagert werden können, während die andere Schicht aus einem feintitrigen oder dichten, dünnerem Filtervlies zur Trenung von Feststoffen vom Wasser besteht. Beide Schichten sind bevorzugt miteinander vernadelt. Eine solche aus zwei Fasern enthaltenden Schichten bestehende Erosionsschutzmatte wird auf einem zu schützenden Boden ausgelegt und vor oder nach dem Auslegen mit Sand, feinem Kies oder Erde gefüllt. Durch das erst nach dem Vernadeln erfolgende Füllen der Wirrfaserschicht kann das feste Füllgut nicht nur beim Transport wieder herausfallen, sondern das Füllgut kann auch - z.B. bei der Verwendung als Küstenschutz unterhalb des Wasserspiegelswieder ausgewaschen werden. Dann könnte aber eine solche Erosionsschutzmatte aufschwimmen, weshalb in der DE-A-2.321.362 auch beschrieben wird, wie eine solche Matte gegenüber dem Boden befestigt werden kann.

Der Erfindung liegt deshalb die Aufgabe zugrunde, einen gattungsgemäßen Schichtkörper zu schaffen, bei dem die vorgenannten Nachteile vermieden werden und dessen Anwendungsmöglichkeiten vergrößert werden.

Diese Aufgabe wird durch den Gegenstand des Anspruches 1 gelöst. Die erfindungsgemäß für die Partikelschicht verwendeten inerten Gesteinspartikel, wie z.B. Sand, Kies oder dergleichen, die eine Härte aufweisen, die sie beim Vernadeln unzerstörbar macht, eignen sich insbesondere dazu, als Trägerstoff und / oder Verdünnungsmittel z.B. für die oben angesprochenen Wirkstoffpartikel verwendet zu werden. Durch die als Kernschicht mitvernadelten Gesteinspartikel erhält der Schichtkörper auch ein spezifisches Gewicht, das ihn in Flüssigkeit nicht mehr aufschwimmen läßt, sondern dafür sorgt, daß er sich am Boden eines Gefäßes, eines Sees oder dergleichen absetzt.

Während bei den bekannten Schichtkörpern der durchschnittliche Korndurchmesser der Partikel nach dem Vernadeln kleiner ist, als vor dem Vernadeln, insbesondere der Druchmesserbereich durch Zerteilen einiger Partikel ver-größert wurde, enthält der erfindungsgemäße Schichtkörper nun genau die Korngrößen, die vorher aufgegeben wurden, da die Gesteinspartikel durch ihre Härte nicht mehr zerstört werden.

Die erfindungsgemäß verwendeten Gesteinspartikel weisen nun von ihrer Materie her Eigenschaften auf, insbesondere da sie von den Nadeln nicht durchdrungen oder zerstört werden können, die gegen ein Vernadeln sprechen. Es hat sich jedoch in überraschender Weise gezeigt, daß die Deckschicht und die Unterlagsschicht mit üblichen Vernadelungstechniken, z.B. mittels Vernadelungsnadeln mit Widerhaken, wie z.B. Filz oder Dreikantsteppnadeln, ohne wesentliche Beschädigung, d.h. Abnutzung oder Zerstörung derselben durch die Lage der körnigen Partikel hindurch vernadelt werden können. Dies ist wahrscheinlich darauf zurückzuführen, daß die körnigen Partikel vor dem Vernadeln vorzugsweise gegeneinander verschiebbar vorliegen und beim Vernadeln von Nadeln getroffene Partikel seitlich ausweichen können, sodaß der vernadelte Schichtkörper nach der Erfindung mit einer inneren Lage aus harten, körnigen Partikeln erhalten werden kann. Überraschend war auch, daß die körnigen Partikel beim fertigen Erzeugnis nicht zwischen den Fasern der aktiv nadelfähigen Faserschicht durchrieseln, da beim Vernadeln eine solche Verdichtung der Faserschicht erzielt wird, daß ein Austreten der Partikel nicht mehr möglich ist.

Obwohl je nach Anwendungszweck verschieden große Partikel vernadelt werden können, weisen bei einer besonderen Ausführungsform die Partikel eine Korngröße von 0,02 bis 3 mm auf. Entsprechend kann auch das Flächengewicht der Partikel je nach Anwendungszweck zwischen 0,5 und 12 kg/m$^2$ liegen.

Neben den Gesteinspartikeln können nun in dem Schichtkörper noch weitere, andere Partikel vorgesehen sein, die durch erstere "verdünnt" werden. Liegen z.B. beide Partikelgruppen mit gleicher Korngrösse vor, so können diese vor dem Aufgeben auf die Unterlagsschicht innig gemischt werden, sodass sie dann in dem Schichtkörper gleichmässig verteilt vorliegen und kein Entmischen mehr auftreten kann.

Ist dagegen die Korngrösse der weiteren Partikel wesentlich kleiner als die Korngrösse der Gesteinspartikel oder dergleichen, so können die weiteren Partikel den Gesteinspartikeln z.B. adhäsiv angelagert sein.

Diese anderen Partikel können dabei z.B. die bei dem bekannten Schichkörper verwendeten Wirkstoffpartikel sein nämlich z.B. substanzaufnehmende und/oder -abgebende Partikel.

Wendet man als aus in Flüssigkeiten reagierenden Stoffen bestehende Partikel, z.B. solche, die ein Bindemittel sind, an, so können die erfindungsgemässen Schichtkörper auch versteift werden. Als Bindemittel, die sich zum Versteifen eignen, sind jedoch auch z.B. Kunstharze verwendbar.

Das einzelne Faser- oder Filamentvlies sollte ein Flächengewicht von 50 - 400 g/cm2 aufweisen, wobei es von Vorteil ist, wenn dieses Vlies vorvernadelt ist. Insbesondere bei der Verwendung von besonders kleinen Partikeln empfiehlt es sich, dieses Vlies mit einer Folie, vorzugsweise einer Kunststofffolie, vorzuvernadeln.

Vorzugsweise beträgt die Länge der Fasern des Vlieses etwa 40 - 150 mm, wobei diese Länge auch davon abhängt, wie dick der Schichtkörper in seinem Endzustand ausgebildet sein soll, da zumindestens ein Teil dieser Fasern oder Filamente als Haltefasern oder -filamente aus der Deckschicht zum aktiven Vernadeln mit der Unterlagsschicht benutzt wird.

Die Unterlagsschicht kann nun aus dem gleichen, gegebenenfalls zur Partikelschicht symmetrisch angeordneten Vlies bestehen wie die Deckschicht. Die Unterlagsschicht kann aber auch aus einem faser- bzw. filamentfreien Material bestehen, welches aber mindestens passiv nadelbar sein muss. Neben einer Gewebebahn bietet sich dafür vorteilhaft eine Folie, insbesondere eine vorzugsweise zähe Kunststoff-Folie an. Eine solche Folie kann dann vorgeformte, z.B. längliche oder näpfchenartige Vertiefungen aufweisen, in denen die Partikel angeordnet sind. Benachbarte Vertiefungen können nun, wenn gewünscht, mit verschiedenartigen Partikeln gefüllt sein.

Auch dann, wenn die Unterlagsschicht aus einem der Deckschicht entsprechenden Vlies besteht, ist es möglich, die Gesteinspartikel musterförmig, z.B. streifenförmig, zwischen sich gesteinspartikelfreie Streifen lassend, anzuordnen. Diesen musterförmig angeordneten Gesteinspartikeln können nun musterförmig die anderen Partikel überlagert oder ergänzt werden.

Ein solcher erfindungsgemässer Schichtkörper kann nun unter Berücksichtigung der in ihm vernadelten Partikel auf verschiedenen Gebieten verwendet werden.

Ein mit Gesteinspartikeln gefüllter Schichtkörper erhält durch diese, wie schon angesprochen, relativ grosses spezifisches Gewicht. Der Schichtkörper eignet sich somit zum einen zum Beschweren von Gegenständen, auf die er gelegt wird, andererseits kann sein Gewicht auch dazu benutzt werden, andere Partikel, die in ihn eingebracht wurden, z.B. in einem mit Flüssigkeit gefüllten Gefäss am Boden zu halten. Dies können z.B. dünne Stoffe sein, die darüber hinaus noch durch die vorliegenden Gesteinspartikel verdünnt gleichmässig verteilt vorliegen, wodurch sich der Schichtkörper insbesondere für Hydrokulturen eignet.

Aufgrund seines Gewichts und seiner Flexibilität kann der Schichtkörper, insbesondere wenn er bahnförmig vorliegt, auf matschigen Fahrwegen, wie Wald- und Feldwegen, ausgelegt und sofort befahren werden. Wendet man dabei als andere Partikel zusätzlich zu den Gesteinspartikeln Bindemittel, wie Zement od. dgl. an, saugt der Schichtkörper die Flüssigkeit aus dem Matsch und erhärtet, sobald es wieder trockener geworden ist. Durch die besondere Ausbildung dieses Schichtkörpers, bei dem mindestens die Deckschicht aus einem Faser- oder Filamentvlies besteht und die körnigen Partikel durch die Haltefasern gehalten werden, wird dieser Fahrbahnbelag auch dann insgesamt nicht zerstört, wenn der innere ausgehärtete, aus Gesteinspartikeln und Zement bestehende Teil unter dem Gewicht eines darüberfahrenden Fahrzeuges bricht. Solcher Fahrbahnbelag kann deshalb auch bei grossen Temperaturschwankungen arbeiten, ohne dass er dabei zerstört wird, Risse erhält etc.

Aufgrund seines Gewichtes und seiner Zuschneidbarkeit, ohne dass dabei im wesentlichen Teilchen herausfallen können, kann ein erfindungsgemässer Schichtkörper, insbesondere wenn er mit Gesteinspartikeln versehen ist, als Sicherung gegen Wasserdurchbrüche verwendet werden. Dabei wird z.B. ein bahnförmiger Schichtkörper in Rollen zu einem Durchbruch oder zu einer gefährdeten Stelle eines Dammes transportiert, dort abgelegt und einfach ausgerollt. Je nachdem, wie gross die zu sichernde Stelle ist, werden die Längen der abzulegenden Bahn bestimmt, und gegebenenfalls der Schichtkörper am Einsatzort in mehrere Bahnen geschnitten. Selbstverständlich können dann je nach erforderlicher Dicke der Abdeckung bzw. nach der Tiefe des Durchbruches beliebig viele Bahnen übereinander abgerollt bzw. abgelegt werden.

Partikel aus anorganischen Silikatverbindungen, insbesondere soweit es sich um Gesteinspartikel wie z.B. Sand handelt, haben eine grosse Wärmekapazität, wodurch sich erfindungsgemässe Schichtkörper auch vorteilhaft für die äusserliche Behandlung des menschlichen oder tierischen Körpers einsetzen lassen. Soll dabei nur dieser Wärmeeffekt ausgenutzt werden, so ist ein Schichtkörper in dem sich nur Sandpartikel befinden, ausreichend. Ein zuvor z.B. in einem Ofen erwärmter solcher Schichtkörper kann dann als Wärmespender auf die zu behandelnden Körperflächen gelegt werden. Aufgrund seines Gewichtes und seiner gewissen Elastizität passt sich auch ein ebener Schichtkörper dem menschlichen oder tierischen Körper an. Ein erfindungsgemässer Schichtkörper kann aber auch als andere Partikel Fango- oder Schlammpackungen, Kosmetika od. dgl. enthalten und lässt sich dann vorteilhaft als Gesichtsmaske für die Gesichtspflege einsetzen. Im Gegensatz zu bekannten Gesichtsmasken kann diese erfindungsgemässe Gesichtsmaske mitsamt ihrem pakkungsinhalt nach der Gesichtspflege abgehoben und wiederverwendet werden.

Da die körnigen Partikel, wie z.B. Sand, in dem Schichtkörper zwar durch die Haltefasern gehalten, sonst aber gegeneinander frei beweglich sind, eignet sich ein erfindungsgemässer Schichtkörper, insbesondere in der Form einer Matte, auch besonders für Schalldämpfung. Eine solche Matte kann dann z.B. an einem Rohrgestell hängend gelagert sein und beispielsweise neben stark befahrenen Strassen oder auch in Fabrikhallen neben laut dröhnenden Maschinen angeordnet werden.

Aufgrund der schlechten Wärmeleitfähigkeit von Gesteinspartikeln, wie z.B. Sand, können erfindungsgemässe Schichtkörper auch zum Brand- und Wärmeschutz eingesetzt werden. Als andere Partikel werden dann hier feuerlöschende oder feuerhemmende Stoffe verwendet. Ein solcher Schichtkörper kann z.B. als Löschdecke oder Schutzbekleidung ausgebildet sein.

Verwendet man einen erfindungsgemässen Schichtkörper, der mit Sand gefüllt ist, z.B. als sogenannte Autoschutzmatte, so sind dabei aufgrund der Eigenschaften dieses Schichtkörpers verschiedene Verwendungsmöglichkeiten denkbar. Aufgrund der Stabilität eines solchen Schichtkörpers kann er dann z.B. als Unterlegmatte unter die Reifen eines Autos gelegt werden, wenn die Räder aufgrund des Untergrundes, wie z.B. Glatteis oder matschigem Gelände, nicht mehr greifen. Ein solcher Schichtkörper ist aber auch ein leicht handhabbares Zusatzgewicht, welches man einfach in das Auto über die Achse der angetriebenen Räder, d.h. in den meisten Fällen einfach in den Kofferraum legt. Darüber hinaus kann diese Schutzmatte bei stehendem Auto und Frostgefahr im Winter auch als eine sich anschmiegende Abgeckung für die Front- und/oder Heckscheibe des Autos verwendet werden. Darüber hinaus ist es natürlich auch möglich, dass schon vom Herstellerwerk aus solche Schutzmatten zur Schallisolierung an verschiedenen Stellen, insbesondere im Motorraum, angebracht werden.

Aus Vorstehendem wird ersichtlich, dass der erfindungsgemässe Schichtkörper vielfältig verwendet werden kann, so lässt er sich, insbesondere dann, wenn eine optisch ansprechende Deckschicht verwendet wird, auch als Fussboden- oder Wandbelag einsetzen, aufgrund seines Inhaltes wie Gesteinspartikel usw., die mit hydraulischen Bindemitteln als andere Partikel versetzs sein können, ergebeö sich auch auf dem Gebiet der Bauindustrie vielfärtige Anwendungszwecke.

Ein Verfahren zur Herstellung eines erfindungsgemässen Schichtkörbers wird in den Ansprüchen beschrieben. Dabei werden insbesondere auf einer Unterlagsschicht die körnigen Partikel und gegebenenfalls die anderen Partikel abgelegt, auf diese Partikelschicht eine Deckschicht aus einem aktiv nadelbaren Faser- oder Filamentvlies abgelegt und dann an über die ganze Fläche verteilten Stellen des Schichtkörpers Haltefasern einzeln oder büschelweise mittels faserorientierender Nadeln mindestens aus der Deckschicht heraus durch die Partikelschicht hindurch in die die Partikel zurückhaltende Unterlagsschicht derart hineingetragen, dass die Unterlagsschicht und die Deckschicht miteinander verbunden werden. Insbesondere beim Vernadeln von Gesteinspartikeln werden bevorzugt die Vibrationen der Vernadelungsmaschine nicht gedämpft, sondern positiv zum Vernadeln ausgenutzt. Es empfiehlt sich darüber hinaus, den Abstand der Nadeln des Nadelbrettes grösser als sonst üblich zu wählen und dann, um eine etwa gleiche Vernadelungsdichte zu erhalten, den Vorschub pro Vernadelungsvorgang kleiner als bisher üblich einzustellen.

Insbesondere dann, wenn ein festerer, insbesondere biegesteiferer Schichtkörper erhalten werden soll, können die Unterlagsschicht und/oder die Deckschicht schrumpffähige Fasern enthalten, die nach dem Vernadeln einer Schrumpfbehandlung unterzogen werden.

Weitere Einzelheiten und Vorteile der Erfindung ergeben sich aus den Unteransprüchen und aus den im folgenden anhand der Zeichnung beschriebenen Ausführungsbeispielen. In der Zeichnung sind Teilbereiche erfindungsgemässer Schichtkörper schematisch und vergrössert dargestellt.

Es zeigt:

Figur 1 eine erste Ausführungsform eines Schichtkörpers im Schnitt, bei dem sowohl die Unterlagsschicht, als auch die Deckschicht aus einem Faservlies besteht und die Partikel gleichmässig verteilt sind;

Figur 2 eine zweite Ausführungsform des Schichtkörpers im Schnitt, bei dem die Unterlagsschicht mit näpfchenartigen Vertiefungen versehen ist, in der sich die Partikel befinden;

Figur 3 eine dritte Ausführungsform des Schichtkörpers im Schnitt, bei der die Partikel streifenförmig in dem Schichtkörper angeordnet sind;

Figur 4 eine vierte Ausführungsform des Schichtkörpers im Schnitt, bei der der Schichtkörper gemäss Figur 3 von zwei Seiten her vernadelt ist;

Figur 5 eine fünfte Ausführungsform des Schichtkörpers, wobei auf einen mit körnigen Partikeln gefüllter Schichtkörper eine von einer zweiten Deckschicht abgedeckte Schicht mit anderen Partikeln aufgenadelt ist, und

Figur 6 die Ausführungsform von Figur 5 in der Draufsicht.

Ein Schichtkörper 1 weist hier eine Deckschicht 2 auf, die hier aktiv vernadelbar ist und aus einem Faservlies besteht. Eine Unterlagsschicht 3, die mindestens passiv vernadelbar ist, wird von aus der Deckschicht 2 entnommenen Haltefasern 4 gegenüber der Deckschicht 2 gehalten. Zwischen der Deckschicht 2 und der Unterlagsschicht 3 ist eine Schicht 5 aus körnigen Partikeln 6 angeordnet. Die beiden Schichten 2 und 3 sind durch die Partikelschicht 5 hindurch miteinander vernadelt. Die Vernadelung kann nach einem in der Nadelfilztechnologie bekannten Nadelverfahren erfolgen, wie es z.B. von R. Krčma im "Handbuch der Textilverbundstoffe", Deutscher Fachverlag, Frankfurt am Main, 1970, Seiten 198 - 202, beschrieben ist. In dieser Technologie werden zum Vernadeln am häufigsten Filznadeln mit dreieckigem Nadelschaft und seitlichen, gegen die Spitze zu gerichteten Widerhaken verwendet. Gebräuchlich sind auch andere Formen, wie Gabelnadeln und Loop-Nadeln. Auch die in vorgenanntem Buch erwähnten Nähwirknadeln lassen sich für die Vernadelung des Schichtkörpers entsprechend verwenden. Die Filznadeln erfassen beim Einstechen in die Faserschicht 2 einzelne oder Büschel von Fasern 4 aus dieser Faserschicht und verflechten sie mit der Unterlagsschicht 3. Die Faserschicht 2 muss zu diesem Zweck aktiv nadelfähig sein, d.h. es sollen sich Fasern aus dieser Schicht erfassen lassen, wobei ein Teilstück dieser Fasern 4 noch in der Schicht 2 verankert bleibt.

Durch den Nadelvorgang werden nicht nur, die Deckschicht 2 und die Unterlagsschicht 3 miteinander verbunden, es werden auch die körnigen Partikel 6 der Schicht 5 durch die zahlreich auf die ganze Fläche des Schichtkörpers 1 verteilt durchgezogenen Haltefasern 4 am seitlichen Verschieben gehindert. Dadurch ist es möglich, den Schichtkörper in beliebige Formen zu zerschneiden, ohne dass die Partikel in wesentlicher Menge aus der Schnittkante herausrieseln.

Der bahnförmig hergestellte Schichtkörper 1 kann aber auch durch Trennschweissen in jeweils gewünschte Grössen zerteilt werden. Wenn thermoplastische Fasern verwendet werden, lassen sich insbesondere dabei die Kanten der Einzelstücke durch Schweissen verfestigen. Gegebenenfalls wird im Bereich der Kante ein nichtdargestellter Streifen aus thermoplastischem Material U-förmig unter Druck- und Hitzeeinwirkung angeschweisst, wodurch der Schichtkörper 1 ein gefälligeres Aussehen erhält. Die Schicht 5 von körnigen Partikeln 6 besteht hier aus Gesteinspartikeln von geringer Korngrösse, z.B. aus Sand, der definitionsgemäss eine Korngrösse von 0,02 - 2 mm aufweist. Aber auch Grobsand und sogar Kies und feinkörniger Splitt sind verwendbar, soweit teilhafte gemeinsame Merkmale dieser Materialien sind ihre relativ hohe Wärmekapazität, ihr relativ grosses Gewicht bezogen auf eine bestimmte Schichtdicke und insbesondere ihr inertes Verhalten gegenüber anderen Stoffen.

Wie sich schon aus der Zeichnung ergibt, kann die Unterlagsschicht 3 aus verschiedenen Materialien bestehen. Diese Unterlagsschicht 3 soll beim Durchstechen der Nadeln nicht aufsplittern und soll die durchgestochenen Haltefasern 4, z.B. elastisch, festhalten, z.B. durch Klemmung oder Verflechtung, d.h. die Unterlagsschicht 3 soll mindestens passiv nadelfähig sein.

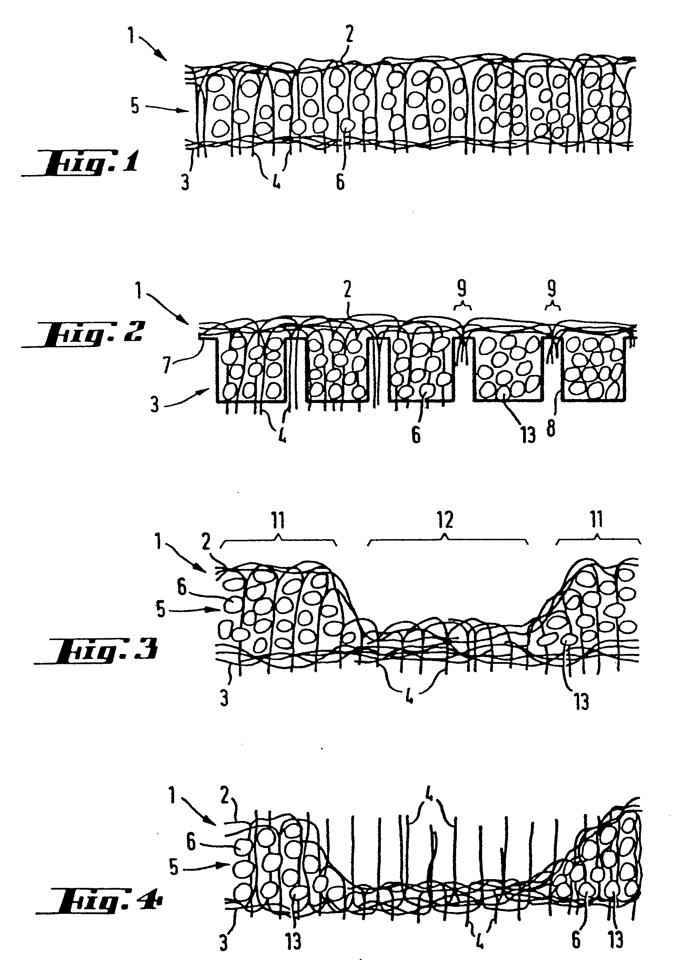

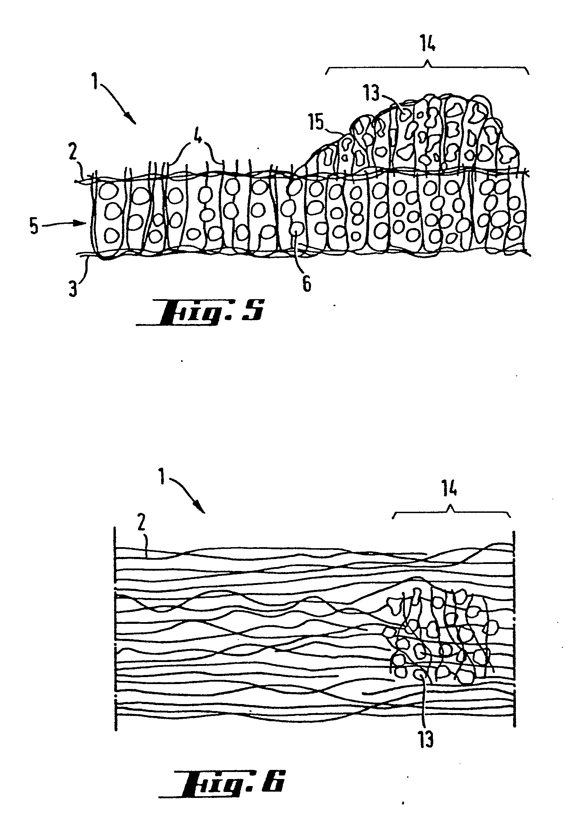

Es eignen sich hierfür z.B. Kunststoff-Folien aus weichelastischem Material (vergleiche z.B. Figur 2), Faserschichten in genügender Dichte, die durch den Nadelprozess selber noch weiterverdichtet und verfilzt werden, sodass sie die Partikel 6 zurückhalten, sowie adhäsiv gebundene Faserverbundstoffe, Vliesstoffe oder Spunbonds. Die Unterlagsschicht 3 kann auch selbst aktiv nadelfähig sein, was erlaubt, den Schichtkörper 1, wie in Figur 4 dargestellt, zusätzlich von der Gegenseite her zu vernadeln. Es ist auch möglich, unter eine Kunststoff-Folie od. dgl. als Unterlagsschicht 3 eine weitere aktiv nadelfähige Faserschicht auf der Aussenseite des Schichtkörpers vorzusehen und den Schichtkörper 1 von beiden Seiten her zu vernadeln.

Die Faserschicht, sei es als Deckschicht 2 oder als Unterlagsschicht 3 eingesetzt,kann durch separate Vernadelung vorverdichtet sein, sie kann auf eine Trägerschicht, wie z.B. eine Kunststoff-Folie, einen Faserverbundstoff od. dgl. aufgenadelt sein, um die Handhabung bei der Herstenung zu erleichtern und/oder um das Durchsickern von feinen Partikeln 6, insbesondere von den anderen Partikeln 13 vor dem Vernadeln des Schichtkörpers 1 zu verhindern.

Als Fasermaterial für das Faservlies kommen die verschiedensten textilen Fasern in Frage. Es sind sowohl anorganische, als auch organische Fasern verwendbar. Insbesondere eignen sich für das Faservlies Polypropylen- oder Polyesterfasern, die sich thermoplastisch verformen, verschweissen oder zertrennen lassen. Für besondere Anwendungen können saugfähige Fasern, wie Wolle, Baumwolle, Zellwolle oder Viskose eingesetzt werden. Gegebenenfalls werden diese Fasern zuvor zweckentsprechend behandelt. Andererseits können auch wasserquellbare oder wasserlösliche Fasern, wie Polyvinylalkoholfasern od. dgl., verwendet werden, um nassverformbare Schichtkörper zu fertigen. Als Unterlagsschicht 3 kann, wie Figur 2 zeigt, auch eine Kunststoff Folie 7 oder ein Faserverbundstoff verwendet werden, die mit Vertiefungen 8 versehen sind, die z.B. durch Tiefziehen im warmplastischen Zustand erzielt werden. Diese Vertiefungen 8 sind gemäss Figur 2 näpfchenartig ausgebildet. Diese Vertiefungen können jedoch auch länglich ausgebildet sein, wobei sie dann parallel zueinander zu liegen kommen und z.B. in ihrer Lage gegeneinander versetzt angeordnet sein können. Die Vertiefungen 8 öffnen sich dabei zur Deckschicht 2 hin, sodass in diese Vertiefungen die Partikel 6 eingebracht werden können. In dem Ausführungsbeispiel gemäss Figur 2 ist somit die Schicht 5 von Partikeln 6 nicht zusammenhängend, sondern in zahlreiche Portionen aufgeteilt. Die Nadeleinstiche können gleichmässig dicht über die ganze Fläche des Schichtkörpers 1 verteilt sein, wie dies bei den drei linken Näpfchen der Figur 2 gezeigt ist, wobei dort die Haltefasern 4 auch durch die Böden der Näpfchen hindurchgreifen. Wären die Haltefasern 4 weniger tief eingenadelt, wie dies einer nicht dargestellten Ausführungsform entspricht, so enden im Bereich der Vertiefungen 8 diese Haltefasern in den Näpfchen selbst, während die Haltefasern die vertiefungsfreien Stellen 9 der Kunststoff-Folie 7 durchdringen, wodurch die Deckschicht 2 mit der als Kunststoff-Folie 7 ausgebildeten Unterlagsschicht verbunden wird. Dabei kann beim Vernadeln des Schichtkörpers so vorgegangen werden, dass die Nadelspitzen trotzdem den Boden der Vertiefungen 8 perforieren, sodass Fluide auch von Seiten der Unterlagsschicht 3 in die Vertiefungen 8 fliessen können. Gemäss der Darstellung in der rechten Hälfte der Figur 2 ist die Deckschicht 2 mit der Kunststoff-Folie 7 nur im Bereich der vertiefungsfreien Stellen 9 durch Haltefasern 4 verbunden. Zur Herstellung dieser Ausführungsform bedarf es jedoch besonderer Sorgfalt.

Bei der in Figuren 3 und 4 dargestellten Ausführungsform des Schichtkörpers 1 sind auf eine aktiv nadelfähige Faserschicht 3 Reihen oder Streifen von körnigen Partikeln 6 abgelegt. Diese bilden eine unterbrochene Zwischenschicht, durch welche hindurchgenadelt wird. Auf diese Reihen 11 von Partikeln 6 wird eine weitere aktiv nadelfähige Faserschicht 2 als Deckschicht abgelegt und der Schichtkörper von oben hindurch Die Ausführungsform gemäss Figur 4 entspricht im wesentlichen der Ausführungsform gemäss Figur 3, hier wird nun allerdingsder Schichtkörper 1 auch von unten her vernadelt, d.h. die Haltefasern 4 sind sowohl aus der Deckschicht 2, als auch der Unterlagsschicht 4 entnommen.

Den Ausführungsformen gemäss Figuren 3 und 4 ist nun gemeinsam, dass sie an den partikelfreien Stellen 12 eine Art Scharnier bilden, was sich insbesondere dann auswirkt, wenn in den mit Partikeln versetzten Streifen oder Reihen 11 Gesteinspartikel 6 mit anderen Partikeln 13 als Bindemittel in abgebundener Form vorliegen.

Eine der Ausführungsform gemäss Figuren 3 oder 4 ähnliche, nicht dargestellte Ausführungsform kann in benachbarten Streifen 11 abwechselnd Partikel 6 wie Sand od. dgl. und andere Partikel 13 aufweisen.

In den Figuren 5 und 6 ist ein Schichtkörper 1 dargestellt, der ähnlich wie im Beispiel der Figur 1 gezeigt, aufgebaut ist. Der Schichtkörper 1 ist allerdings hier in der gezeichneten Lage von unten vernadelt. Auf die hier nur passiv ver nadelte Deckschicht 2 ist eine weitere Schicht 14 von anderen Partikeln 13, wie z.B. Wirkstoffen oder substanzaufnehmende und/oder -abgebende Trägerstoffpartikel, abgelegt. Die weitere Schicht 14 ist mittels einer weiteren, gegebenenfalls vorvernadelten Faserschicht 15 auf den Schichtkörper aufgenadelt. Wie aus der Draufsicht in Figur 6 ersichtlich ist, ist der Bereich der Schicht 14 flächenmässig in Anpassung an einen besonderen Verwendungszweck begrenzt. Gemäss einem nicht dargestellten Ausführungsbeispiel können auch neben- oder übereinander weitere solche Partikelschichten wie die Schicht 14 aufgenadelt sein. Die Gesteinspartikel 6 dienen dann, wenn in der Schicht 5 auch andere Partikel 13 vorgesehen sind als Verdünnungsmittel für diese. Dabei können diese anderen Partikel 13 etwa die gleiche Korngrösse aufweisen wie die Gesteinspartikel 6, die anderen Partikel 13 können aber auch, dies gilt insbesondere für Bindemittel wie Zement, Kalk oder dergleichen, eine wesentlich kleinere Korngrösse aufweisen, wie dies z.B. in Figur 2 dargestellt ist.

Durch Verwendung von Gips als Bindemittel können Verbände zur Fixierung von Knochenbrüchen hergestellt werden. Der Schichtkörper 1 wird unmittelbar vor dem Auflegen auf das verletzte Körperglied mit Wasser gesättigt, dem Körperglied angepasst und das Körperglied bis zum Abbinden des Gipses ruhiggestellt. Es lassen sich mittels Bindemittelzugabe auch aus Schichtkörpern gebildete Verbände mit einseitiger Flexibilität herstellen. Dazu wird als Beispiel auf die Ausführungsform gemäss Figur 3 und Figur 4 verwiesen. Die anhand dieses Beispiels oben beschriebene Anisotropie der Flexibilität des Schichtkörpers 1 lässtsich nämlich durch Beimischung und Aktivierung eines Bindemittels zu den Gesteinspartikeln 6 verstärken, wodurch die Reihen 11 versteift werden, während die Zwischenräume flexibel bleiben. Durch Tiefziehen oder durch Nassverformen nach dem Vernadeln eines Schichtkörpers 1 kann ein solcher auch als Gesichtsmaske, z.B. für kosmetische Anwendungen, verwendet werden. Hierbei kann eine lockere Vernadelung von Vorteil sein. Diese Schichtkörper 1 können mittels den Gesteinspartikeln 6 beigemischten und nach der Formgebung aktivierten Bindemitteln 13 versteift werden. Die Augen- und die Nasenpartien werden dann durch einfaches Ausschneiden oder Ausstanzen von Oeffnungen freigelegt. Es ist dabei ein wesentlicher Vorteil des erfindungsgemässen Schichtkörpers, dass die Partikel von den durchgenadelten Haltefasern 4 am Herausrieseln gehindert werden. Hier empfiehlt sich besonders die Ausführungsform gemäss Figuren 5 und 6, wobei die weitere Schicht 14 dann die für die Gesichtspflege notwendigen Wirkstoffpartikel 13 enthält.

Bei Verwendung von termoplastischen Fasern können die Ausschnitte auch z.B. mittels eines heissen Stanzeisens ausgeschnitten werden, wobei die Fasern an den Schnitträndern gleichzeitig miteinander verschweisst werden, sodass die Ränder nicht ausfransen können.

Die Verwendung von Sand als Partikel 6, insbesondere von gewaschenem Quarzsand, zusammen mit sterilisierfähigem Fasermaterial, wie Baumwolle, Polypropylen, bietet den Vorteil, dass der Schichtkörper hygienisch einwandfrei zubereitet werden behandlungsflüssigkeiten, völlig inert verhält. Es kann durch den Schichtkörper hindurch, wenn er z.B. zur Körperbehandlung benutzt wird, hindurchmassiert werden, wobei dieser den Zusammenhalt nicht verliert, wie dies bei den üblichen Fango- oder dergleichen Packungen der Fall ist.

Aus folgender Tabelle, die nach Korndurchmesserbereichen der Partikel 6, zeilenweise gegliedert ist, ergeben sich bevorzugte zu verwendende Grössenbereiche für das Partikelgewicht pro Flächeneinheit, die Faserstärke, das Vliesgewicht je Faserschicht pro Flächeneinheit, die Nadelstärke und die Stichdichte.

Wird als Unterlagsschicht 3 eine Kunststoff-Folie 7 verwendet wie im Fall der Fig. 2, so beträgt die Foliendicke zwischen 3o und 200 µm, wobei bei grösserem Korndurchmesser auch eine dickere Folie verwendet werden sollte.

Beispiel für die Herstellung eines Schichtkörpers 1, gemäss Fig. 1:

Die Deckschicht 2 und die Unterlagsschicht 3 wurden identisch aus dem gleichen Material auf folgende Weise hergestellt. Auf eine Trägerfolie (in Fig. 1 nicht dargestellt) aus Polyäthylen von 0.1 mm Dicke wurde ein Fasergemisch von 200 g/m$^2$ von Polyester-Fasern mit einem Fasertiter von 3.3 und 17 dtex und einer Stapellänge von 90 mm abgelegt. Die Fasern wurden mit der Folie mittels konventioneller Filznadeln mit 45 Stichen pro cm$^2$ vorvernadelt. Eine solche vorvernadelte Faserschicht wurde mit den Faserbärten nach oben gerichtet auf den Zuführtisch der Nadelmaschine gelegt, dann darauf eine Schicht von gewaschenem Quarzsand der Korngrösse 0.5 - 0.75 mm in einer Menge von 7 kg/m$^2$ gestreut. Die Schicht wurde sodann mit einer identischen vorvernadelten Faserschicht mit den Faserbärten nach unten gerichtet, zugedeckt. Der ganze Schichtkörper wurde mit konventionellen 25 - gauge Filznadeln und mit 30 Stichen pro cm$^2$ vernadelt. Es entstand ein Schichtkörper von zirka 7.4 kg pro m$^2$ Fläschengewicht.

Beispiel für die Herstellung eines Schichtkörpers 1, gemäss Fig. 2:

Als Unterlagsschicht 3 wurde eine Noppenfolie 7 aus Polyäthylen mit zylinderischen Vertiefungen (Noppen) von 1 cm Durchmesser und 5 mm Tiefe, 7'700 Noppen pro m$^2$ verwendet. Die Noppen wurden mit Quarzsand gestrichen gefüllt, dann mit einer Schicht von Polypropylen-Fasern 17 dtex, Stappellänge 90 mm, 200 g/m$^2$ zugedeckt. Der Schichtkörper wurde mit konventionellen 25 - gauge Filznadeln mit 30 Stichen pro cm$^2$ vernadelt. Es entstand ein Schichtkörper 1 von

| Korndurch-messer (mm) | Partikel-gewicht pro Flächeneinheit (kg/cm2) | Faser (dtex) | Vliesgewicht je Schicht, pro Flächen-einheit (g/m2) | Nadel-stärke (gg) | Stich-dichte (Stich/cm2) |
|---|---|---|---|---|---|
| 0.02-0.1 | 0.5 - 1 | <10 | 150 | 36 | 200 - 100 |
| 0.1 -1.0 | 1 - 5 | 5-20 | 150 | 30 | 120 - 60 |
| 1 -3 | 1 - 10 | 10-30 | 250 | 25 | 60 - 20 |
| 3 -(30) | 5 - 12(20) | > 20 | 350 | 17 | 30 - 5 |

zirka 1.8 kg pro m² Flächengewicht. Die Noppen waren durch die Nadeleinstiche perforiert worden. Der Sand konnte jedoch nicht herausfallen.

## Patentansprüche

1. Mattenförmiger Schichtkörper mit einer Deckschicht aus einem Faser- oder Filamentvlies, einer Unterlagsschicht und einer zwischen diesen Schichten angeordneten Partikelschicht aus körnigen Partikeln, wobei die Partikel durch einzelne oder Büschel von Haltefasern gehalten werden, die über die Fläche des Schichtkörpers verteilt durch die Partikelschicht hindurchgenadelt sind und die Deckschicht und die Unterlagsschicht untereinander verbinden, dadurchgekennzeichnet, daß die Partikel (6) aus inerten Gesteinspartikeln, wie z.B. Sand, Kies oder dergleichen, bestehen und eine Härte aufweisen, die sie beim Vernadeln unzerstörbar macht.

2. Schichtkörper nach Anspruch 1, dadurch gekennzeichnet, daß die Partikel (6) eine Korngröße von 0,02 bis 30 mm, vorzugsweise von 0,02 bis 3 mm, aufweisen.

3. Schichtkörper nach Anspruch 1 oder 2, dadurch gekennzeichnet, daß die Partikel (6) in diesem Schichtkörper (1) mit einem Flächengewicht von 0,5 bis 12 kg/m² vorliegen.

4. Schichtkörper nach einem der vorhergehenden Ansprüche, dadurch gekennzeichnet, daß neben den Gesteinspartikeln (6) weitere Partikel (13) vorgesehen sind.

5. Schichtkörper nach Anspruch 4, dadurch gekennzeichnet, daß die anderen Partikel (13) etwa die gleiche Korngröße aufweisen, wie die Gesteinspartikel (6).

6. Schichtkörper nach Anspruch 4, dadurch gekennzeichnet, daß die Korngröße dieser weiteren Partikel (13) wesentlich kleiner ist, als die Korngröße der Gesteinspartikel (6).

7. Schichtkörper nach Anspruch 4 oder 6, dadurch gekennzeichnet, daß die weiteren Partikel (13) den Gesteinspartikeln (6), z.B. adhäsiv, angelagert sind.

8. Schichtkörper nach Anspruch 4, 6 oder 7, dadurchgekennzeichnet, daß die Gesteinspartikel (6) von den weiteren Partikeln (13) insbesondere vollständig umhüllt sind.

9. Schichtkörper nach einem der Ansprüche 4 bis 8, dadurch gekennzeichnet, daß die anderen Partikel substanzaufnehmende und / oder abgebende Trägerstoffpartikel sind.

10. Schichtkörper nach Anspruch 9, dadurch gekennzeichnet, daß die anderen Partikel (13) Wirkstoffe enthalten oder selbst Wirkstoffe sind.

11. Schichtkörper nach einem der Ansprüche 4 bis 10, dadurch gekennzeichnet, daß die anderen Partikel (13) aus in Flüssigkeiten reagierenden Stoffen bestehen.

12. Schichtkörper nach einem der Ansprüche 4 bis 11, dadurch gekennzeichnet, daß die anderen Partikel (13) Bindemittel sind.

13. Schichtkörper nach einem der vorhergehenden Ansprüche, dadurch gekennzeichnet, daß das einzelne Faser oder Filamentvlies (2, 3) ein Flächengewicht von 50 bis 400 g/m² aufweist.

14. Schichtkörper nach einem der vorhergehenden Ansprüche, dadurch gekennzeichnet, daß das Vlies (2, 3) vorvernadelt ist.

15. Schichtkörper nach Anspruch 14, dadurch gekennzeichnet, daß das Vlies (2, 3) mit einer Folie, vorzugsweise einer Kunststoffolie, vorvernadelt ist.

16. Schichtkörper nac einem der vorhergehenden Ansprüche, dadurch gekennzeichnet, daß das Vlies (2, 3) Fasern mit . einer Länge von 40 bis 150 mm oder Filamente enthalt

17. Schichtkörper nach einem der vorhergehenden Ansprüche,dadurch gekennzeichnet, daß mindestens die Deckschicht (2) durch aus ihr stammende Haltefasern (4) oder - filamenten aktiv vernadelt ist.

18. Schichtkörper nach einem der vorhergehenden Ansprüche, dadurch gekennzeichnet, daß auch die Unterlagsschicht (3) aus einem Faser oder Filamentvlies besteht.

19. Schichtkörper nach Anspruch 18, dadurch gekennzeichnet, daß der Schichtkörper (1) sowohl von der Deckschicht (2), als auch von der Unterlagsschicht (3) her vernadelt ist.

20. Schichtkörper nach einem der vorhergehenden Ansprüche, dadurch gekennzeichnet, daß die Gesteinspartikel (6) musterförmig, z.B. streifenförmig, zwischen sich gesteinspartikelfreie Stellen (12) lassend, angeordnet sind.

21. Schichtkörper nach Anspruch 20, dadurch gekennzeichnet, daß zwischen den Gesteinspartikeln (6) enthaltenden Mustern Muster mit den anderen Partikeln (13) angeordnet sind.

22. Schichtkörper nach einem der Ansprüche 1 bis 17 und 20 oder 21, dadurch gekennzeichnet, daß die Unterlagsschicht (3) aus einem Vliesstoff besteht.

23. Schichtkörper nach einem der Ansprüche 1 bis 17 und 20 oder 21, dadurch gekennzeichnet, daß die Unterlagsschicht (3) aus einer Gewebebahn besteht.

24. Schichtkörper nach einem der Ansprüche 1 bis 17 und 20 oder 21, dadurch gekennzeichnet, daß die Unterlagsschicht (3) aus einem faser- bzw. filamentfreien Material besteht.

25. Schichtkörper nach Anspruch 24, dadurch gekennzeichnet, daß die Unterlagsschicht (3) aus einer Folie (7), insbesondere einer vorzugsweisen zähen Kunststoffolie besteht.

26. Schichtkörper nach einem der Ansprüche 22 bis 25, dadurch gekennzeichnet, daß die Unterlagsschicht (3) Vertiefungen (8) aufweist.

27. Schichtkörper nach Anspruch 26, dadurch gekennzeichnet, daß die Vertiefungen (8) näpfchenartig ausgebildet sind.

28. Schichtkörper nach Anspruch 26, dadurch gekennzeichnet, daß die Vertiefungen (8) länglich ausgebildet sind.

29. Schichtkörper nach einem der Ansprüche 26 bis 28, dadurch gekennzeichnet, daß die Partikel (6, 13) insbesondere nur in den Vertiefungen (8) angeordnet sind.

30. Schichtkörper nach einem der Ansprüche 26 bis 29, dadurch gekennzeichnet, daß benachbarte Vertiefungen (8) mit verschiedenartigen Partikeln (6, 13) gefüllt sind.

31. Schichtkörper nach einem der Ansprüche 26 bis 30, dadurch gekennzeichnet, daß die der Deckschicht (2) entnommenen Haltefasern (4) die Unterlagsschicht (3) an den vertiefungsfreien Stellen (9) durchdringen.

32. Schichtkörper nach Anspruch 31, dadurch gekennzeichnet, daß die Eindringtiefe der Haltefasern (4) in die Vertiefungen (8) kleiner ist, als die Höhe derselben.

33. Schichtkörper nach Anspruch 31, dadurch gekennzeichnet, daß die Haltefasern (4) die Unterlagsschicht (3) auch im Bereich der Vertiefungen durchdringen.

34. Schichtkörper nach einem der vorhergehenden Ansprüche, dadurch gekennzeichnet, daß er mit einer Vernadelungsdichte von 5 bis 200 Einstichen/cm$^2$ vorliegt.

35. Verfahren zum Herstellen eines mattenförmigen Schichtkörpers mit einer Deckschicht aus einem Faser- oder Filamentvlies, einer Unterlagsschicht und einer zwischen diesen Schichten angeordneten Partikelschicht aus körnigen Partikeln, bei dem unter Einbringung von einzelnen oder Büscheln von Haltefasern, die über die gesamte Fläche des Schichtkörpers verteilt vorliegen, die drei Schichten durch die Partikelschicht hindurch miteinander vernadelt werden, um die Deckschicht mit der Unterlagsschicht zu verbinden, dadurch gekennzeichnet, daß als Kernschicht inerte Gesteinspartikel, wie z.B. Sand, Kies oder dergleichen, verwendet werden, die eine Härte aufweisen, die sie beim Vernadeln unzerstörbar macht.

36. Verfahren nach Anspruch 35, dadurch gekennzeichnet, daß zusätzlich Haltefasern mittels faserorientierender Nadeln aus der nadelfähigen Unterlagsschicht heraus in die Deckschicht hineingetragen werden.

37. Verfahren nach Anspruch 35 oder 36, dadurch gekennzeichnet, daß die Partikel in Vertiefungen der Unterlagsschicht abgelegt werden, die durch Auflegen der Deckschicht abgedeckt werden.

38. Verfahren nach einem der Ansprüche 35 bis 37, dadurchgekennzeichnet, daß die Vibrationen der Vernadelungsmaschine nicht gedämpft werden.

39. Verfahren nach einem der Ansprüche 35 bis 38, dadurchgekennzeichnet, daß die Unterlagsschicht und/oder die Deckschicht schrumpffähige Fasern enthalten, die nach dem Vernadeln einer Schrumpfbehandlulng unterworfen werden.

**Claims**

1. Mat-like laminated article with a covering layer made of a fibrous or filament fleece, an under-layer and a particle layer made up of granular particles arranged between these two layers, the particles being retained by individual retaining threads or bundles of retaining threads which are distributed over the area of the article, and are needled through the particle layer and connect the covering layer and the under-layer together, characterised in that the particles (6) comprise inert mineral particles such as, for example, sand, gravel or the like and are of a hardness which makes them indestructible by the needling.

2. Laminated article according to claim 1, characterised in that the particles (6) have a particle size of 0.02 to 30 mm, preferably of 0.02 to 3 mm.

3. Laminated article according to claim 1 or 2, characterised in that the particles (6) are distributed in this article (I) with a weight per unit area of 0.5 to 12 kg/m$^2$.

4. Laminated article according to one of the foregoing claims, characterised in that further particles (13) are present in addition to the mineral particles (6).

5. Laminated article according to claim 4, charjcterised in that the other particles (13) have substantially the same particle size as the mineral particles (6).

6. Laminated article according to claim 4, characterised in that the particle size of these further particles (13) is substantially less than the particle size of the mineral particles (6).

7. Laminated article according to claim 4 or 6, characterised in that the further particles (13) are applied to the mineral particles (6), e.g. adhesively.

8. Laminated article according to claim 4,6 or 7, characterised in that the mineral particles (6) are enclosed in the further particles (13), in particular entirely enclosed.

9. Laminated article according to one of claims 4 to 8, characterised in that the other particles are particles of a substance-absorbing and/or substance-yielding carrier material.

10. Laminated article according to claim 9, characterised in that the other particles (13) contain reactive materials or are themselves reactive materials.

11. Laminated article according to one of claims 4 to 10, characterised in that the other particles (13) comprise materials which react in fluids.

12. Laminated article according to one of claims 4 to 11, characterised in that the other particles (13) comprise a binder.

13. Laminated article according to one of the foregoing claims, characterised in that the individual fibrous or filament fleece (2,3) has a weight per unit area of 50 to 400 g/m$^2$

14. Laminated article according to one of the foregoing claims, characterised in that the fleece (2,3) is pre-needled.

15. Laminated article according to claim 14, characterised in that the fleece (2,3) is pre-needled to a sheet, preferably a synthetic resin sheet.

16. Laminated article according to one of the foregoing claims, characterised in that the fleece (2,3) contains fibres having a length of 40 to 150mm or filaments.

17. Laminated article according to one of the foregoing claims, characterised in that at least the covering layer (2) is actively needled by retaining threads (4) or filaments originating from it.

18. Laminated article according to one of the foregoing claims, characterised in that the under-layer (3) also comprises a fibre or filament fleece.

19. Laminated article according to claim 18, characterised in that the laminated article (1) is needled both from the covering layer (2) and also from the under-layer (3).

20. Laminated article according to one of the foregoing claims, characterised in that the mineral particles (6) are arranged in a pattern, e.g. in strips, leaving particle-free points (12) between them.

21. Laminated article according to claim 20, characterised in that patterns with the other particles (13) are arranged between the patterns containing the mineral particles (6).

22. Laminated article according to one of claims 1 to 17 and 20 or 21, characterised in that the under-layer (3) comprises a fleecy material.

23. Laminated article according to one of cLaims 1 to 17 and 20 or 21, characterised in that the under-layer (3) comprises a textile web.

24. Laminated article according to one of claims 1 to 17 and 20 or 21, characterised in that the under-layer (3) comprises non-fibrous and non-filamentary material.

25. Laminated article according to claim 24, characterised in that the under-layer (3) comprises a sheet material (7), in particular a synthetic resin sheet, preferably tough.

26. Laminated article according to one of claims 22 to 25, characterised in that the under-layer (3) has recesses (8).

27. Laminated article according to claim 26, characterised in that the recesses (8) are of pot-like shape.

28. Laminated article according to claim 26, characterised in that the recesses (8) are of elongated form.

29. Laminated article according to one of claims 26 to 28, characterised in that the particles (6,13) are arranged in the recesses (8), in particular only in them.

30. Laminated article according to one of claims 26 to 29, characterised in that adjacent recesses (8) are filled with different kinds of particles (6,13).

31. Laminated article according to one of claims 26 to 30, characterised in that the retaining threads (4) originating from the covering layer (2) penetrate through the under-layer (3) at the points (9) which are free from recesses.

32. Laminated article according to claim 31, characterised in that the depth of penetration of the retaining threads (4) into the recesses (8) is smaller than the depth of the recesses.

33. Laminated article according to claim 31, characterised in that the retaining threads (4) penetrate the under-layer (3) in the region of the recesses as well.

34. Laminated article according to one of foregoing claims, characterised in that the needling density is from 5 to 200 stitches/cm$_2$.

35. Method of producing a mat-like laminated article with a covering layer of a fibrous or filamentary fleece, an under-layer and a particle layer made of granular particles arranged between these layers, in which, with the application of individual retaining threads or bundles of retaining threads which are present distributed over the entire area of the article, the three layers are needled together through the particle layer in order to connect the covering layer to the under-layer, characterised in that inert mineral particles such as e.g. sand, gravel or the like, are used as a core layer and have a hardness which makes them indestructible by the needling.

36. Method according to claim 35, characterised in that additional retaining threads are drawn out of the under-layer (which is capable of being needled) by means of thread-orienting needles, and into the covering layer.

37. Method according to claim 35 or 36, characterised in that the particles are deposited in recesses in the under-layer and the recesses are closed off by the application of the covering layer.

38. Method according to one of claims 35 to 37, characterised in that the vibrations of the needling machine are left undamped.

39. Method according to one of claims 35 to 38, characterised in that the under-layer and/or the covering layer contain shrinkable fibres which are subjected to a shrinking process after the needling.

**Revendications**

1. Corps stratifié en forme de natte comprenant une couche de couverture formée d'une toison de fibres ou de filaments, une couche de base et une couche de particules granulées disposées entre ces couches, les particules étant maintenues par des touffes de fibres de retenue ou différentes fibres de retenue qui sont aiguilletées à travers la couche de particules à l'état reparti sur la surface du corps stratifié et qui relient l'une à l'autre la couche de couverture et la couche de base, caractérisé en ce que les particules (6) se composent de particules minérales inertes, par exemple, du sable, du gravier ou analogues, et ont une dureté qui les rend indestructibles au cours de l'aiguilletage.

2. Corps stratifié selon la revendication 1, caractérisé en ce que les particules (6) ont une grosseur de grains de 0,02 à 30 mm, de préférence de 0,02 à 3 mm.

3. Corps stratifié selon l'une quelconque des revendications 1 et 2, caractérisé en ce que les particules (6) ont, dans le corps stratifié (1), un poids par unité de surface de 0,5 à 12 kg/m². 

4. Corps stratifié selon l'une quelconque des revendications 1 à 3, caractérisé en ce que d'autres particules (13) sont prévues en plus des particules minerales (6).

5. Corps stratifié selon la revendication 4, caractérisé en ce que les autres particules (13) ont approximativement la même grosseur de grains que celle des particules minérales (6).

6. Corps stratifié selon la revendication 4, caractérisé en ce que la grosseur de grains de ces autres particules (13) est considérablement plus petite que celle des particules minérales (6).

7. Corps stratifié selon l'une quelconques des revendications 4 et 6, caractérisé en ce que les autres particules (13) sont fixées, par exemple, adhésivement aux particules minérales (6).

8. Corps stratifié selon l'une quelconque des revendications 4, 6 et 7, caractérisé en ce que les particules minérales (6) sont enrobées, en particulier entierement, par les autres particules (13).

9. Corps stratifié selon l'une quelconque des revendications 4 à 8, caractérisé en ce que les autres particules sont des particules de matières d'appui cédant et/ou recevant une substance.

10. Corps stratifié selon la revendication 9, caractérisé en ce que les autres particules (13) contiennent des matières actives ou sont elles-mêmes des matières actives.

11. Corps stratifié selon l'une quelconque des revendications 4 à 10, caractérisé en ce que les autres particules (13) se composent de matiàres réagissant dàns les liquides.

12. Corps stratifié selon l'une quelconque des revendications 4 à 11, caractérisé en ce que les autres particules (13) sont des liants.

13. Corps stratifié selon l'une quelconque des revendications 1 à 12, caractérisé en ce que les différentes fibres ou la toison de filaments (2, 3) a un poids par unité de surface de 50 à 400 g/m².

14. Corps stratifié selon l'une quelconque des revendications 1 à 13, caractérisé en ce que la toison (2, 3) est préaiguilletée.

15. Corps stratifié selon la revendication 14, caractérisé en ce que la toison (2,3) est préaiguilletée avec une feuille, de préférence une feuille de matière synthétique.

16. Corps stratifié selon l'une quelconque des revendications 1 à 15, caractérisé en ce que la toison (2, 3) contient des fibres d'une longueur de 40 à 150 mm ou des filaments.

17. Corps stratifié selon l'une quelconque des revendications 1 à 16, caractérisé en ce qu'au moins la couche de couverture (2) est aiguilletée activement par des filaments ou fibres de retenue (4) provenant de ladite couche (2).

18. Corps stratifié selon l'une quelconque des revendications 1 à 17, caractérisé en ce que la couche de base (3) se compose aussi d'une toison de fibres ou de filaments.

19. Corps stratifié selon la revendication 18, caractérisé en ce qu'il est aiguilleté à partir tant de la couche de couverture (2) que de la couche de base (3).

20. Corps stratifié selon l'une quelconque des revendications 1 à 19, caractérisé en ce que les particules minérales (6) sont disposées sous la forme de motifs, par exemple, sous la forme de nervures, en laissant entre elles des endroits (12) sans particules minérales.

21. Corps stratifié selon la revendication 20, caractérisé en ce que des motifs avec d'autres particules (13) sont disposés entre les motifs contenant les particules minérales (6).

22. Corps stratifié selon l'une quelconque des revendications 1 à 17 et 20 ou 21, caractérisé en ce que la couche de base (3) se compose d'une étoffe de nappes de fibres.

23. Corps stratifié selon l'une quelconque des revendications 1 à 17 et 20 ou 21, caractérisé en ce que la couche de base (3) se compose d'une bande de tissu.

24. Corps stratifié selon l'une quelconque des revendications 1 à 17 et 20 ou 21, caractérisé en ce que la couche de base (3) se compose d'une matière exempte de fibres, voire de filaments.

25. Corps stratifié selon la revendication 24, caractérisé en ce que la couche de base (3) se compose d'une feuille (7), en particulier une feuille de matière synthétique de préférence tenace.

26. Corps stratifié selon l'une quelconque des revendications 22 à 25, caractérisé en ce que la couche de base (3) comprend des évidements (8).

27. Corps stratifié selon la revendication 26, caractérisé en ce que les évidements (8) sont réalisés sous la forme de petits godets.

28. Corps stratifié selon la revendication 26, caractérisé en ce que les évidements (8) sont assez allongés.

29. Corps stratifié selon l'une quelconque des revendications 26 à 28, caractérisé en ce que les particules (6, 13) ne sont disposées en particulier que dans les evidements (8).

30. Corps stratifié selon l'une quelconque des revendications 26 à 29, caractérisé en ce les évidements voisins (8) sont remplis de particules (6, 13) de nature différente.

31. Corps stratifié selon l'une quelconque des revendications 26 à 30, caractérisé en ce que les fibres de retenue (4) prélevées de la couche de couverture (2) penètrent dans la couche de base (3) aux endroits (9) sans évidements.

32. Corps stratifié selon la revendication 31, caractérisé en ce que la profondeur de pénétration des fibres de retenue (4) dans les évidements (8) est plus petite que la hauteur de ceux-ci.

33. Corps stratifié selon la revendication 31, caractérisé en ce que les fibres de retenue (4) pénètrent également dans la zone des évidements de la couche de base (3).

34. Corps stratifié selon l'une quelconque des revendications 1 à 33, caractérisé en ce qu'il présente une densité d'aiguilletage de 5 à 200 piqûres par cm².

35. Procédé de fabrication d'un corps stratifié en forme de natte comprenant une couche de couverture formée d'une toison de fibres ou de filaments, une couche de base et une couche de particules disposées entre ces couches, les particules étant granulées, et dans lequel, en introduisant différentes fibres de retenue ou touffes de fibres de retenue réparties sur la surface entière du corps stratifié, on aiguillette l'une à l'autre les trois couches en passant par la couche de particules pour relier la couche de couverture à la couche de base, caractérisé en ce qu'on utilise, comme couche centrale, des particules minérales inertes, par exemple, du sable, du gravier ou analogues, dont la dureté les rend indestructibles au cours de l'aiguilletage.

36. Procédé selon la revendication 35, caractérisé en ce que des fibres de retenue sont introduites supplémentairement dans la couche de couverture a partir de la couche de base aiguilletable au moyen d'aiguilles orientant les fibres.

37. Procédé selon l'une quelconque des revendications 35 et 36, caractérisé en ce que les particules s'ont déposées dans des évidements de la couche de base qui sont recouverts par la pose de la couche de couverture.

38. Procédé selon l'une quelconque des revendications 35 à 37, caractérisé en ce que les vibrations de la machine à aiguilleter ne sont pas amorties.

39. Procédé selon l'une quelconque des revendications 35 à 38, caractérisé en ce que la couche de base et/ou la couche de couverture contiennent des fibres rétractibles qui sont soumises à un traitement de rétraction après l'aiguilletage.

_Fig. 1_

_Fig. 2_

_Fig. 3_

_Fig. 4_

**Fig. 5**

**Fig. 6**